**Europäisches Patentamt**

**European Patent Office**

**Office européen des brevets**

(19)

(11) Veröffentlichungsnummer: **0 211 304**
**B1**

(12)

# EUROPÄISCHE PATENTSCHRIFT

(45) Veröffentlichungstag der Patentschrift:
13.06.90

(51) Int. Cl.⁵: **F16D 65/12**, F16D 65/847

(21) Anmeldenummer: 86109969.5

(22) Anmeldetag: 21.07.86

(54) **Bremsscheibe für niedrige Antriebsleistung.**

(30) Priorität: 01.08.85 DE 3527577

(43) Veröffentlichungstag der Anmeldung:
25.02.87 Patentblatt 87/9

(45) Bekanntmachung des Hinweises auf die Patenterteilung:
13.06.90 Patentblatt 90/24

(84) Benannte Vertragsstaaten:
BE DE FR GB IT NL SE

(56) Entgegenhaltungen:
EP-A- 0 082 786
EP-A- 0 109 035
WO-A-79/01105
DE-A- 3 141 434
DE-B- 1 164 455
DE-B- 2 505 205
GB-A- 2 144 186
US-A- 4 529 079

(73) Patentinhaber: Bergische Stahl-Industrie,
Papenbergerstrasse 38, D-5630 Remscheid(DE)

(72) Erfinder: Gallus, Heinz, Prof. Dr.-Ing., In der Schönauer
Aue 3, D-5100 Aachen(DE)
Erfinder: Klein, Willi, Dipl.-Ing., Dodde-Strasse 14,
D-5630 Remscheid(DE)
Erfinder: Otto, Alfred, Karl-Michel-Strasse 2,
D-5630 Remscheid(DE)
Erfinder: Gronemann, Manfred, Friedhof-Strasse 8,
D-5630 Remscheid(DE)

(74) Vertreter: Jung, Hermann L., Dipl.-Chem.,
Postfach 1728 Augusta-Allee 10, D-6380 Bad Homburg
v.d.H.(DE)

## Beschreibung

Die Erfindung betrifft eine Bremsscheibe für niedrige Antriebsleistung, bei der auf der Rückseite eines Bremsgurtes bzw. zwischen den Bremsringen einer einteiligen Bremsscheibe Rippen angeordnet sind, welche auf einer radial gekrümmten Linie liegen und in beiden Laufrichtungen der Bremsscheibe symmetrische Kanäle für die Kühlluft bilden.

Aus der DE-A 31 41 434 sind Rippen mit rundem Querschnitt bekannt, die nach einem bestimmten Muster auf der Rückseite der Bremsringe angeordnet sind. Die am Innenumfang der Bremsringe liegenden Rippen sind in radialer Richtung verlängert. Der Nachteil dieser Rippenanordnung besteht darin, dass mit diesen Rippen die Wärme nicht optimal abgeführt werden kann. Der runde Rippenquerschnitt hat gegenüber anderen Rippenquerschnitten den Nachteil einer kleineren Oberfläche bei gleicher Querschnittsfläche.

Zur Vergrösserung der Rippenoberfläche, mit der die Wärme abgeführt werden kann, wurde auch schon vorgeschlagen, einen Teil der stiftförmigen Rippen kürzer zu machen als die anderen Rippen (DE-B 25 o5 2o5). Dies führte aber nur dazu, dass die insgesamt abgeführte Wärmemenge niedriger war, als wenn alle Rippen volle Länge gehabt hätten.

Auch die Ausbildung einer Bremsscheibe mit zwei Bremsringen als Rotor eines Querstromgebläses nach DE-B 11 64 455, wobei die Rippenteilstücke auf gekrümmten Linien liegen, brachte keine nennenswerte Verbesserung der Wärmeabfuhr.

Der vorliegenden Erfindung liegt daher die Aufgabe zugrunde, die Nachteile der bekannten Vorrichtungen zu vermeiden und eine Bremsscheibe zu schaffen, bei der eine geringere Leistung für den Durchsatz des Kühlmittels durch die Kühlkanäle verbraucht wird, aber die Wärmeabgabe von der Bremsscheibe an das Kühlmedium gross ist.

Die Lösung der Aufgabe besteht darin, dass auf konzentrischen Linien etwa tangential liegend Rippen mit ovalem Querschnitt angeordnet sind, bei denen das Verhältnis von grosser zu kleiner Achse mindestens 2 beträgt und der radiale Abstand der Rippenzentren kleiner als der tangentiale Abstand der Rippenzentren ist und der konzentrische Abstand zwischen den Rippen um nicht mehr als 2o% differiert.

Vorteilhaft wird die Form der Rippen der inneren und/oder äussersten konzentrischen Reihe bis zur Degeneration des elliptischen Rippenquerschnitts zum Kreisquerachnitt verändert.

Zweckmässig werden ausgewählte Rippen mit ihrer grossen Achse etwa radial angeordnet.

Wichtig ist, dass der Übergang vom Bremsgurt in die Rippen über einen möglichst grossen Fussquerschnitt erfolgt.

Der Vorteil dieser Rippenanordnung liegt vor allem darin, dass die für die Kühlung der Bremsscheibe aufzuwendende Verlustleistung möglichst klein gehalten werden kann, ohne dass die Wärmeabfuhr darunter leidet. Die Anordnung der Rippen auf den radial gekrümmten Linien ist so gewählt, dass in beiden Laufrichtungen über den gesamten Fahrgeschwindigkeitsbereich die Umströmung der elliptischen Rippen zu einem intensiven Wärmeaustausch führt. Dies wird erreicht durch die grossflächige Ausführung des vorderen und hinteren Staupunktbereichs und die von jedem Rippenkörper abfliessende Nachlaufströmung, welche bei ovaler Rippenausbildung den Turbulenzgrad der Strömung und damit den Wärmeübergang erhöht.

In den Zeichnungen sind beispielsweise Ausführungsformen der Erfindung dargestellt und zwar zeigt :

Figur 1 eine Ansicht auf die Rückseite eines Bremsrings mit geschnittenen Rippen der einfachsten Anordnung,

Figur 2 bei gleicher Ansicht eine andere Anordnung der Rippen und

Figur 3 eine Anordnung der Rippen kombiniert mit anderen Rippenformen.

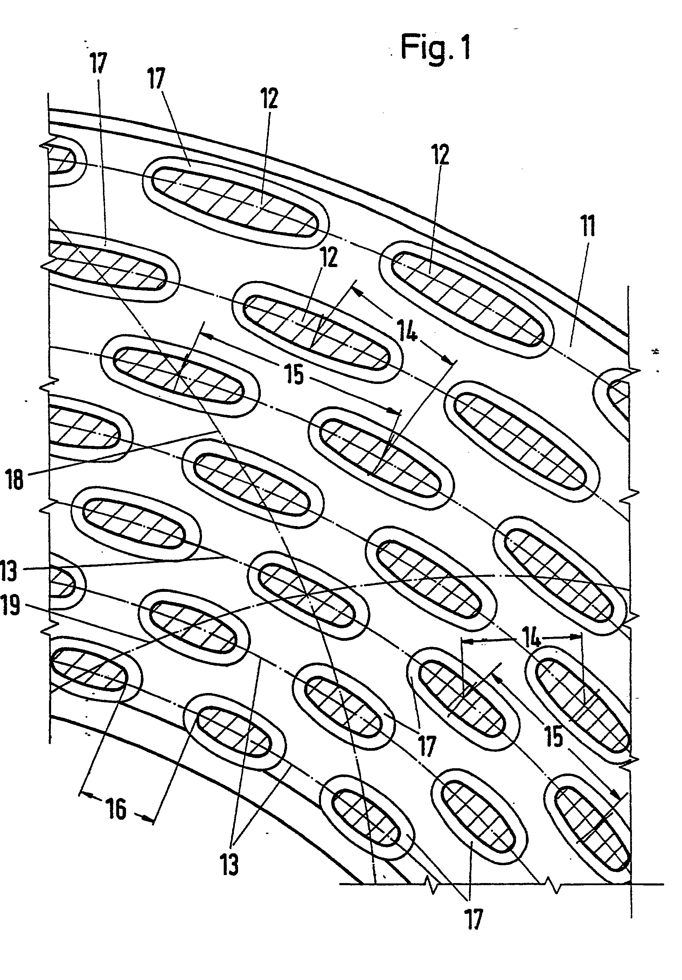

Nach Figur 1 sind auf der Rückseite eines Bremsgurts 11 Rippen 12 mit ovalem Querschnitt angeordnet und zwar derart, dass sie auf konzentrischen Linien 13 liegen, wobei die grosse Achse des Querschnittovals der Rippe tangential liegt. Alle Rippen 12 liegen ausserdem auf radial gekrümmten Linien 18 und 19, wodurch in beiden Laufrichtungen der Bremsscheibe symmetrische Kanäle für die Kühlluft gebildet werden. Das Verhältnis der grossen Achse einer jeden Rippe 12 zu ihrer kleinen Achse beträgt 2,0 bis 3,5 von innen nach aussen. Der radiale Abstand 14 der Rippenzentren ist kleiner als der tangentiale Abstand 15 der Rippenzentren, gleichgültig auf welcher konzentrischen Linie 13 die Rippen 12 liegen. Der konzentrische Abstand 16 zweier auf einer konzentrischen Linie 13 liegenden Rippen ist für alle Rippen 12 im wesentlichen gleich, unabhängig davon auf welcher konzentrischen Linie 13 die Rippen liegen. Hierdurch wird erreicht, dass die Kühlluft infolge der Aufheizung durch die Rippen 12 eine Beschleunigung bei der Durchströmung erfährt. Der konzentrischen Abstand 16 zwischen zwei Rippen 12 sollte nicht mehr als 2o% Unterschied aufweisen. Zur Verbesserung des Wärmeübergangs erfolgt der Übergang vom Bremsgurt 11 in die Rippen 12 über einen möglichst grossen Fussquerschnitt 17, wodurch der gesamte Wärmefluss aus den Bremsgurten 11 über die Rippen 12 in die Kühlluft wesentlich erleichtert und verbessert wird.

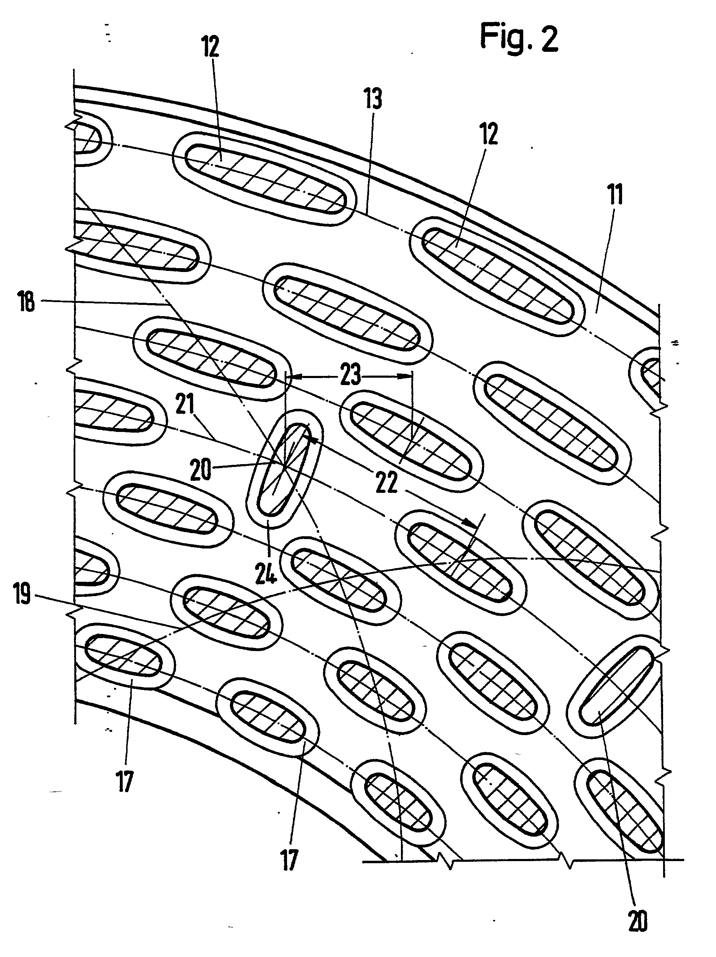

Nach Figur 2 sind neben den auf konzentrischen Linien 13 und den radial gekrümmten Linien 18 und 19 liegenden Rippen 12 zusätzliche Rippen 2o vorgesehen, welche einen ovalen Querschnitt besitzen und sich mit ihrer grossen Achse etwa radial erstrecken. Diese Rippen 2o können, wie in Fig. 2 dargestellt, in einer konzentrischen Linie 21 liegen, wobei sie sich aber mit einer ebenfalls in dieser Linie 21 liegenden Rippe 12 abwechseln. Hier sind nun eine ganze Reihe von Variationen möglich. Einmal können die radialen Rippen 2o in mehreren konzentrischen Linien 13 bzw 21 liegen oder sie können sich nur in jeder zweiten Linie 13 befinden oder es können auch in einer konzentrischen Linie 21 nur und ausschliesslich radiale Rippen 2o liegen. Auch in diesem Beispiel erfolgt der Übergang ·vom Bremsgurt 11 in die Rippen über einen möglichst grossen Fussquerschnitt 17 und 24 und zwar bei allen Rippen, also auch bei den radialen Rippen 2o. Ausserdem ist der Abstand der Rippenzentren der Rippen 2o von den benachbarten Rippen 12 oder 2o auch hier in tangentialer Richtung grösser als in radialer Richtung, das heisst der Abstand 22 ist grösser als der Abstand 23.

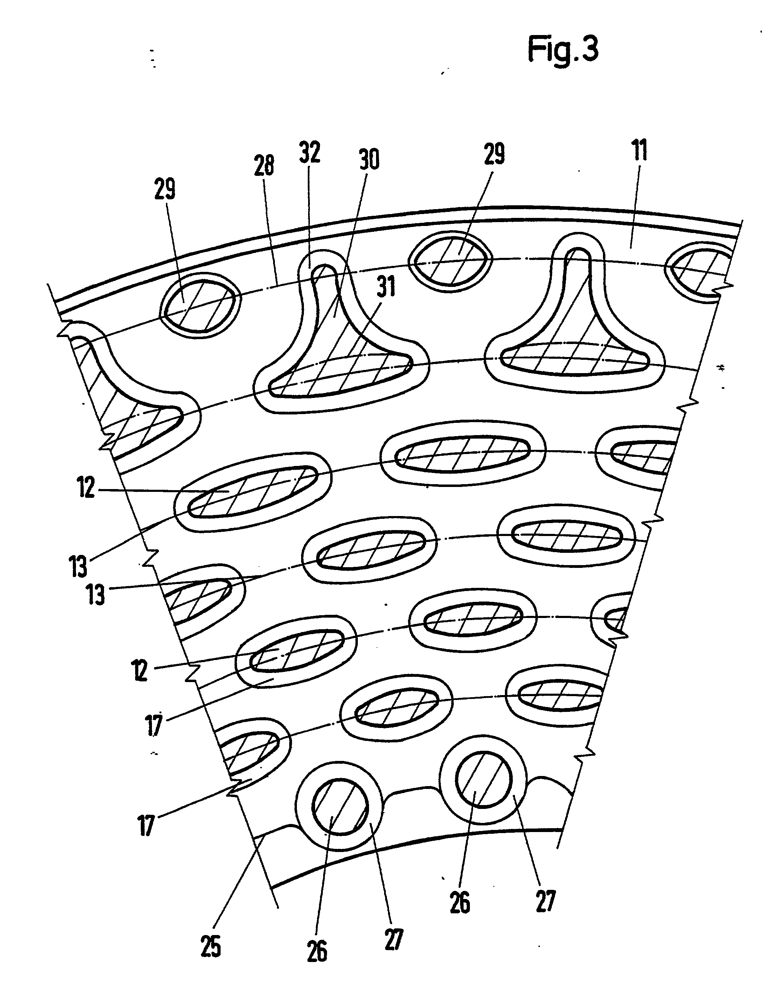

In Figur 3 ist eine Rippenkombination dargestellt, bei der die Masse der Rippen 12 auf konzentrischen Linien 13 liegt, jedoch ist die innere konzentrischen Linie 25 mit Rippen 26 bestückt, bei denen der elliptischen Rippenquerschnitt zum Kreisquerschnitt degeneriert ist. Aber auch bei diesen Rippen 26 erfolgt der Übergang vom Bremsgurt 11 in die Rippe 26 über einen möglichst grossen Fussquerschnitt 27.

Die äusserste Reihe 28 trägt Rippen 29, welche zu dem in der Zeichnung dargestellten Querschnitt degeneriert sind und deren Abstand doppelt so gross wie normal ist.

Zwischen die Rippen 29 erstreckt sich nämlich eine radiale Verlängerung 30, welche an den ovalen Rippen 31 der vorletzten Reihe angeordnet ist und mit dieser Rippe 3o aus einem Stück besteht.

Grundsätzlich erfolgt bei allen Rippen 12, 2i, 26, 29 und 31 mit Verlängerung 3o der Übergang vom Bremsgurt 11 in die Rippen über einen möglichst grossen Fussquerschnitt 17, 24 27 und 32, wodurch der Wärmefluss vom Bremsgurt über die Rippen in die Kühlluft erheblich erleichtert wird.

Eine weitere Verbesserung des Wärmeflusses kann noch dadurch erreicht werden, dass die Rippen in ihrer Längsausdehnung in bekannter Weise konisch oder jegelig ausgebildet sind und zwar derart, dass die dünnste Stelle bei einseitigen Bremsringen am vom Bremsgurt abgewandten Ende der Rippe vorhanden ist und bei doppelseitigen Bremsringen die dünnste Stelle in der Mitte zwischen den beiden Bremsringen vorhanden ist.

Es sind noch mehrere Variationen denkbar, welche alle im Rahmen der Erfindung liegen. So können zum Beispiel alle Rippen mit ihrer grossen Achse abwechselnd tangential und radial liegen, wodurch ein regelmässiges Muster entsteht. Auch lassen sich die absoluten Abstände der Rippen untereinander innerhalb eines gewissen Rahmens ohne weiteres verändern, ohne dass die Wirkung der Rippen verschlechtert wird.

Auch kann die Anzahl der konzentrischen Linien, welche auf einem Bremsgurt angeordnet sind, innerhalb bestimmter Grenzen frei gewählt werden. Durch die zwangsweise folgenden Parameter werden die Grenzen bestimmt, insbesondere dadurch, dass gewisse Dicken der Rippen beim Abgiessen aus Metall nicht unterschritten werden können.

Die innere Rippenreihe 25 muss nicht, wie in Fig.1 dargestellt, Rippen mit einem Querschnitt enthalten, welcher bis zum Kreisquerschnitt degeneriert ist, sondern es sind auch andere Querschnitte möglich. Die Wahl des Querschnitts hängt weitgehend von dem gewünschten Kühlmitteldurchsatz ab. Wird ein hoher Durchsatz gewünscht, so muss der Abstand zwischen den Rippen relativ gross sein und man wird einen mehr dem Kreis angenäherten Querschnitt wählen. Im anderen Falle, das heisst bei geringem Luftdurchsatz, kann der Querschnitt der Rippen 26 sich mehr der ovalen Form nähern.

## Patentansprüche

1. Bremsscheibe für niedrige Antriebsleistung, bei der auf der Rückseite eines Bremsrings bzw. zwischen den Bremsringen einer einteiligen Bremsscheibe Rippen angeordnet sind, welche auf einer radial gekrümmten Linie liegen und in beiden Laufrichtungen der Bremsscheibe symmetrische Kanäle für die Kühlluft bilden, dadurch gekennzeichnet, dass auf konzentrischen Linien (13,25,28) etwa tangential liegend Rippen (12,2o,26,31) mit ovalem Querschnitt angeordnet sind, bei denen das Verhältnis von grosser zu kleiner Achse mindestens 2 beträgt und der radiale Abstand (14,23) der Rippenzentren kleiner als der tangentiale Abstand (15,22) der Rippenzentren ist und der Abstand (16) zwischen den Rippen (12,2o,26,31) um nicht mehr als 2o% differiert.

2. Bremsscheibe nach Anspruch 1, dadurch gekennzeichnet, dass die Form der Rippen (26,29) der inneren (25) und/oder der äussersten (28) konzentrischen Reihe bis zur Degeneration des elliptischen Rippenquerschnitts zum Kreisquerschnitt verändert wird.

3. Bremsscheibe nach Anspruch 1, dadurch gekennzeichnet, dass ausgewählte Rippen (2o) mit ihrer grossen Achse etwa radial auf einer konzentrischen Linie (13) angeordnet sind.

4. Bremsscheibe nach Anspruch 1, dadurch gekennzeichnet, dass radial liegende Lüfterrippen vorgesehen sind, welche sich im mittleren bzw. im äusseren Bereich über mindestens eine konzentrische Reihe (13) erstrecken.

5. Bremsscheibe nach Anspruch 1, dadurch gekennzeichnet, dass die ovalen Rippen (31) der letzten bzw. vorletzten Reihe radial sich erstreckende Ansätze (3o) aufweisen, die sich radial nach aussen bzw. radial nach innen erstrecken.

6. Bremsscheibe nach einem der Ansprüche 1 bis 5, dadurch gekennzeichnet, dass der Übergang vom Bremsgurt (11) in die Rippen (12,2o,26,3o,31) über einen möglichst grossen Fussquerschnitt (17,24,27,32) erfolgt.

7. Bremsscheibe nach einem der Ansprüche 1 bis 6, dadurch gekennzeichnet, dass die Rippen zum vom Bremsgurt abweisenden Ende bzw. zur Mitte zwischen zwei Bremsgurten hin konisch ausgebildet sind.

## Claims

1. Brake disc for low driving power in which, on the rear side of a brake ring or between the brake rings of a one-piece brake disc, there are arranged ribs which lie on a radially curved line and form symmetrical channels for the cooling air in both directions of running of the brake disc, characterized in that ribs (12, 20, 26, 31) of oval cross-section are arranged approximately tangentially on concentric lines (13, 25, 28), in which ribs the ratio of major to minor axis is at least two and the radial distance (14, 23) of the rib centres is smaller than the tangential distance (15, 22) of the rib centres and the distance (16) between the ribs (12, 20, 26, 31) differs by no more than 20%.

2. Brake disc according to Claim 1, characterized in that the shape of the ribs (26, 29) of the inner (25) and/or the outermost (28) concentric row is altered until the degeneration of the eliptical rib cross-section to a circular cross-section.

3. Brake disc according to Claim 1, characterized in that selected ribs (20) are arranged with their major axis approximately radially on a concentric line (13).

4. Brake disc according to Claim 1, characterized in that radially situated ventilation ribs are provided which, in the central or in the outer region, extend over at least one concentric row (13).

5. Brake disc according to Claim 1, characterized in that the oval ribs (31) of the last or penultimate row have radially extending projections (30) which extend radially outwards or radially inwards.

6. Brake disc according to one of Claims 1 to 5, characterized in that the transition from the brake flange (11) to the ribs (12, 20, 26, 30, 31) is effected via as large a root cross-section (17, 24, 27, 32) as possible.

7. Brake disc according to one of Claims 1 to 6, characterized in that, towards the end facing away from the brake flange or towards the centre between two brake flanges, the ribs are of conical design.

**Revendications**

1. Disque de freinage de mécanisme d'entraînement de faible puissance, sur le dos de la jante et entre les jantes dudit disque monobloc étant disposées des ailettes incurvées selon l'axe radial et formant des canaux symétriques à air de refroidissement dans les deux sens de rotation du disque, caractérisé en ce que des ailettes pratiquement tangentes (12, 20, 26, 31) et de section ovale sont disposées sur des lignes concentriques, le rapport entre le grand et le petit axe étant au moins de 2, l'écartement radial (14, 23) des centres des ailettes étant inférieur à l'écartement tangentiel (15, 22) entre centres des ailettes et l'écartement (16) entre ailettes (12, 20, 26, 31) ne variant pas de plus de 20%.

2. Disque de frein selon revendication 1, caractérisé en ce que la forme des ailettes (26, 29) de la rangée concentrique intérieure (25) et/ou de la rangée concentrique la plus à l'extérieure (28) dégénère d'une section elliptique en section circulaire.

3. Disque de frein selon revendication 1, caractérisé en ce que le grand axe de certaines ailettes sélectionnées (20) est disposé radialement sur une ligne concentrique (13).

4. Disque de frein selon revendication 1, caractérisé en ce que des ailettes de refroidissement couchées radialement sont prévues s'étendre sur au moins une rangée concentrique (13) dans la zone médiane et extérieure du disque.

5. Disque de frein selon revendication 1, caractérisé en ce que les ailettes ovales (31) de la dernière et de l'avant-dernière rangée présentent des appendices (30) s'étendant radialement vers l'extérieur et radialement vers l'intérieur.

6. Disque de frein selon l'une des revendications 1 à 5, caractérisé en ce que la transition de la ceinture (11) aux ailettes (12, 20, 26, 30, 31) se fait par une section de piétement (17, 24, 27, 32) la plus grande possible.

7. Disque de frein selon l'une des revendications 1 à 6, caractérisé en ce que les ailettes sont de forme conique à l'extrémité opposée à la ceinture et au centre entre deux ceintures.

# Fig. 1

## Fig. 2

# Fig.3